# EUROPÄISCHE PATENTSCHRIFT

(11) **EP 1 512 600 B1**
(45) Veröffentlichungstag und Bekanntmachung des Hinweises auf die Patenterteilung: **05.03.2008**
(21) Anmeldenummer: 04019797.2
(22) Anmeldetag: 20.08.2004
(51) Int. Cl.: B60T 15/04, B60T 13/38, B60T 17/08, B60T 17/22

(54) **Parkventil für die manuelle Betätigung einer Federspeicher-Feststellbremse eines Anhängers**
Parking valve for manual operation of a spring-loaded trailer parking brake
Valve de frein de stationnement à commande manuelle pour frein de stationnement a ressort accumulateur d'un rémorque

(30) Priorität: 07.09.2003 DE 10341120
(43) Veröffentlichungstag der Anmeldung: 09.03.2005
(73) Patentinhaber: Haldex Brake Products GmbH, 69123 Heidelberg (DE)
(72) Erfinder: Schell, Günter, 69181 Leimen (DE)
(74) Vertreter: Rehberg Hüppe + Partner

(56) Entgegenhaltungen:
- EP-A- 0 544 104
- WO-A-00/30912

## Beschreibung

Die Erfindung betrifft ein Parkventil für die manuelle Betätigung einer Federspeicher-Feststellbremse eines Anhängers, mit einem Gehäuse, das zwei Anschlüsse für eine zu der Lösekammer des Federspeicherbremszylinders führende Löseleitung und eine Leitung für Vorratsluft sowie einen Entlüftungsanschluss aufweist, einem in dem Gehäuse gleitend und dichtend über einen Gesamthub zwischen zwei durch Anschläge begrenzten Endstellungen geführten, aus dem Gehäuse herausragenden Schieber, der relativ zu den Anschlüssen angeordnete Dichtungen trägt, und mit einer bei der manuellen Betätigung zu überwindenden Kraftschwelle. Ein solches Parkventil kann als singuläres Ventil mit Gehäuse, Schieber und entsprechenden Anschlüssen ausgebildet und innerhalb einer Federspeicherbremsanlage eines Anhängers eingesetzt werden. Das Parkventil kann jedoch auch Bestandteil einer Baueinheit sein, die zusätzlich noch ein Löseventil und/oder zumindest die Notbremseinrichtung eines Anhängerbremsventils umfasst. Das Parkventil und das Löseventil sind an sich sehr ähnlich aufgebaut, d. h. sie weisen als wesentliche Bestandteile ein Gehäuse mit einer Bohrung auf, in dem ein mit Dichtungen versehener Schieber über einen Gesamthub zwischen zwei Endstellungen verschiebbar ist. Das Parkventil dient dem Wechsel zwischen Parkstellung und Fahrtstellung. Dabei ist die Parkstellung, in der die Federspeicherbremse angezogen ist, der herausgezogenen Endstellung des Schiebers zugeordnet, während in der eingeschobenen Endstellung entsprechend der Stellung Fahrt die Lösekammer des Federspeicherbremszylinders belüftet und damit die Federspeicherbremse gelöst ist, es sei denn, es liegen andere Betriebszustände vor.

### STAND DER TECHNIK

Ein Parkventil der eingangs beschriebenen Art ist aus der DE 198 53 718 A1 bekannt. In einem mit einer Bohrung versehenen Gehäuse ist ein Schieber zwischen zwei Endstellungen über einen Gesamthub verschiebbar. Ein Teil des Schiebers ist aus dem Gehäuse herausgeführt, so dass die manuelle Betätigung möglich ist. Im Gehäuse des Parkventils sind mehrere Anschlüsse verwirklicht. In Zuordnung zu diesen Anschlüssen besitzt der Schieber Dichtungen und Einschnürungen, um die gewünschten Strömungsverbindungen in den beiden Endstellungen herbeizuführen. Zwischen diesen Endstellungen können sich Zwitterstellungen ergeben, bei denen der Bereich eines Anschlusses von der betreffenden Dichtung nur teilweise überdeckt ist, so dass eine eindeutige Strömungsführung nicht vorliegt. Die beim Verschieben des Schiebers über den Gesamthub zu überwindende Reibung wird im Wesentlichen von zwei Dichtungen erzeugt, die beim Verschieben des Schiebers in der Bohrung des Gehäuses gleiten. Diese Reibung ist über den Gesamthub konstant, so dass sich der Schieber je nach den Bedingungen am einzelnen Parkventil relativ leicht oder etwas schwergängiger verschieben lässt. Infolge der Konstanz der Reibung über den Gesamthub kann es vorkommen, dass der Benutzer beim Verschieben des Schiebers aus der einen Endstellung in die andere Endstellung nur einen Teilhub zurücklegt, weil er annimmt, die andere Endstellung bereits erreicht zu haben. Wenn sich der Schieber im Gehäuse relativ leichtgängig verschieben lässt, besteht die weitere Gefahr, dass er infolge einwirkender Stöße und Schwingungen während der Fahrt selbsttätig eine andere Stellung, beispielsweise eine Zwitterstellung, einnimmt, in der dann unbeabsichtigt eine zusätzliche Bremswirkung über die Feststellbremse auftritt. Das bekannte Parkventil kann in einer oder allen Endstellungen oder Positionen mit einer Kraftschwelle versehen sein. Es kann sich um eine federverspannte Kugelrastierung handeln, welche bei der Betätigung zu überwinden ist. In der Parkstellung kann auch eine Sperreinrichtung vorgesehen sein. Diese Kraftschwelle bzw. Sperreinrichtung entfaltet ihre Wirkung nur in einer oder in beiden Endstellungen des Gesamthubs, so dass sich dort die zu überwindende Kraftschwelle örtlich bemerkbar macht. Der Hub zwischen den beiden Endstellungen ist frei von einer Kraftschwelle. Eine solche Ausbildung trägt nur bedingt zu einer Erhöhung der Sicherheit der manuellen Betätigung bei. Wenn versehentlich beim manuellen Umschalten des Parkventils die jeweils angestrebte Endstellung nicht erreicht wird, können sich nach wie vor während der Fahrt durch einwirkende Stöße und Schwingungen Zwitterstellungen ergeben.

### AUFGABE DER ERFINDUNG

Der Erfindung liegt die Aufgabe zugrunde, ein Parkventil der eingangs beschriebenen Art bereitzustellen, welches dem Benutzer eine erhöhte Bedienungssicherheit bei der manuellen Betätigung zur Verfügung stellt. Darüber hinaus sollen Zwitterstellungen während der Fahrt vermieden werden.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Das Parkventil ist zunächst so ausgebildet, wie es im Stand der Technik bekannt ist, d. h. es sind die verschiedenen Anschlüsse gehäuseseitig verwirklicht, indem diese radial und/oder axial über das Gehäuse des Parkventils verteilt angeordnet sind. Von einem Anschluss führt eine Löseleitung zur Lösekammer des Federspeicherbremszylinders. Es ist auch ein Entlüftungsanschluss vorgesehen, der entweder direkt zur Atmosphäre führt, aber auch dem Anschluss einer Leitung dienen kann, mit der eine anderweitig angeordnete Entlüftungsöffnung erreichbar ist. Zwischen dem Schieber und dem Gehäuse sind Anschlagpaare vorgesehen, die die beiden Endstellungen begrenzen und positionieren, so dass der Schieber über den zwischen den Anschlagpaaren gebildeten Gesamthub zwischen seinen beiden Endstellungen hin und her verschiebbar ist. Der Schieber besitzt umlaufende Dichtungen, meist in Form von in Nuten eingelegten O-Ringen, die an rippenförmig umlaufenden Wulsten des Schiebers verwirklicht sind, so dass sich zwischen diesen Wulsten Verbindungsleitungsabschnitte ergeben. Die Anordnung und Dimensionierung der Dichtungen ist auf die Anordnung der Anschlüsse abgestimmt. Die im Stand der Technik bekannte, punktuell in einer oder beiden Endstellungen wirkende und bei der manuellen Betätigung zu überwindende Kraftschwelle wird vermieden, d. h. zum unmittelbaren Erreichen und unmittelbaren Verlassen der Endstellungen oder auch nur einer der beiden Endstellungen muss nur die normale Reibung zwischen Schieber und Gehäuse überwunden werden, nicht aber die bekannte punktuelle Kraftschwelle. Die Kraftschwelle ist in einen Teilhub verlegt angeordnet, d. h. sie entfaltet ihre Wirkung nicht mehr punktuell an den Endstellungen, sondern zumindest außerhalb einer Endstellung über einen Teilhub, so dass gleichsam ein Kraftschwellenbereich gebildet wird, der bei der manuellen Betätigung überwunden werden muss. Damit soll sich beim Verlassen zumindest einer der beiden Endstellungen zunächst eine leichte Verschiebbarkeit des Schiebers ergeben. Anschließend soll der Teilhub wirksam werden, über dessen Verlauf durch die Kraftschwelle eine erhöhte Reibung zu überwinden ist. Damit wird der Benutzer gezwungen, zur Überwindung des Teilhubs eine erhöhte Kraft aufzuwenden, die in deutlichem Gegensatz zu der vorher eingesetzten vergleichsweise geringeren Verschiebekraft merkbar ist. Damit wird dann verlässlich und reproduzierbar gleichsam zwangsläufig die andere Endstellung erreicht, so dass die Gefahr manueller Fehlbetätigungen zumindest erniedrigt ist. Diese angestrebte Funktion kann entweder nur in einer Verschieberichtung oder in beiden Verschieberichtungen angewendet werden. Die Kraftschwelle bzw. der Kraftschwellenbereich wird durch das Zusammenwirken eines Reibgliedes und einer damit zusammenwirkenden, sich in Richtung des Gesamthubs des Schiebers über einen Teilhub erstreckenden Gegenfläche erbracht. Während des Durchlaufens dieses Teilhubs tritt erhöhte Reibung auf. Die Gegenfläche ist relativ zu dem Reibglied so positioniert, dass mindestens eine der beiden Endstellungen frei von der Kraftschwelle bleibt. Insbesondere ist dies die Endstellung, die der eingeschobenen Endstellung des Schiebers zugeordnet ist.

Das Reibglied kann vorteilhaft als ein in eine Nut eingesetzter O-Ring ausgebildet sein. Ein solcher O-Ring ist ein preiswertes Einzelteil und erfordert zu seiner Anbringung und Unterbringung nur einen geringen Aufwand bei der Bearbeitung der Teile des Parkventils. Es ist aber auch möglich, das Reibglied beispielsweise in Form eines geschlitzten federnden Metallrings oder in anderer Weise auszubilden. Dabei kommt es lediglich darauf an, dass beim Kontakt zwischen dem Reibglied und der Gegenfläche die vergleichsweise erhöhte, vom Benutzer leicht spürbare erhöhte Reibung auftritt.

Für die Relativanordnung zwischen Reibglied und Gegenfläche ergeben sich die beiden Möglichkeiten. Wenn das Reibglied auf dem Schieber angeordnet ist, ist die Gegenfläche gehäuseseitig angeordnet. Wenn das Reibglied gehäuseseitig angeordnet ist, ist die Gegenfläche im Gehäuse verwirklicht. Ein in eine Nut eingesetzter O-Ring als Reibglied kann zusätzlich zur Erbringung einer Abdichtwirkung gegen das Eindringen von Staub und/oder Flüssigkeit in das Innere des Gehäuses dienen.

Es ist sinnvoll, wenn die Gegenfläche ein- oder beidendig mit Anlaufschrägen versehen ist, also mit Schrägflächen, die ein Eintreten des O-Rings relativ zur Gegenfläche erleichtern, ohne dass Abscherwirkungen an dem Reibglied aus elastischem Material oder mit federndem Verhalten auftreten.

Der durch den Kontakt unter erhöhter Reibung zwischen Reibglied und Gegenfläche mit der Kraftschwelle belegte Teilhub kann vorteilhaft so relativ zum Gesamthub zwischen den beiden Endstellungen positioniert sein, dass der Teilhub während des Herausziehens des Schiebers durchlaufen wird. Die beim Eindrücken des Schiebers in das Gehäuse erreichte Endstellung bleibt damit frei von erhöhter Reibung. Es kann ein relativ kurz gehaltener Teilhub im Anschluss an diese Endstellung vorgesehen sein, über den der Schieber beim Herausziehen zunächst leicht verschiebbar ist. Erst anschließend setzt der Teilhub mit der erhöhten Reibung ein, der damit in deutlichem Gegensatz vom Benutzer spürbar wird. Mit dem Erreichen der Endstellung nach Herausziehen des Schiebers kann die erhöhte Reibung durchaus aufrechterhalten bleiben, da diese Stellung normalerweise dem Einlegezustand der Feststellbremse, also der entlüfteten Lösekammer, zugeordnet ist.

Es ist aber auch möglich, dass der Teilhub unter Ausschluss beider Endstellungen relativ zum Gesamthub positioniert ist. Damit liegt in keiner der beiden Endstellungen die erhöhte Reibung vor.

Der Teilhub kann in Richtung des Gesamthubs des Schiebers eine Erstreckung aufweisen, die etwa der Hälfte des Gesamthubs oder mehr entspricht. Auf jeden Fall ist keine örtlich wirkende Kraftschwelle, sondern ein Kraftschwellenbereich mit erhöhter Reibung angestrebt. Dabei sollte der durch den Kontakt unter erhöhter Reibung zwischen Reibglied und Gegenfläche mit der Kraftschwelle oder dem Kraftschwellenbereich belegte Teilhub so relativ zum Gesamthub zwischen den beiden Endstellungen positioniert sein, dass Zwitterstellungen des Parkventils eingeschlossen bzw. überdeckt sind, damit solche Zwitterstellungen nicht unbeabsichtigt während der Fahrt durch einwirkende Stöße und Schwingungen eingenommen werden können. Der sich zwischen Gesamthub und Teilhub unter erhöhter Reibung ergebende Differenzhub, der vergleichsweise leichtgängig überwunden werden kann, endet dann immer am Beginn des Teilhubs mit der erhöhten Reibung, so dass Zwitterstellungen vermieden werden.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Schnitt durch einen Gehäuseblock mit einem Parkventil in der Stellung Fahrt.
- **Fig. 2**: zeigt das Parkventil gemäß Fig. 1 in der Stellung Parken.
- **Fig. 3**: zeigt das Parkventil in einer zweiten Ausführungsform in der Stellung Fahrt.
- **Fig. 4**: zeigt das Parkventil gemäß Fig. 3 in der Stellung Fahrt.
- **Fig. 5**: zeigt das Parkventil in einer dritten Ausführungsform in der Stellung Fahrt.
- **Fig. 6**: zeigt das Parkventil gemäß Fig. 5 in der Stellung Fahrt.
- **Fig. 7**: zeigt das Parkventil in einer vierten Ausführungsform in der Stellung Fahrt.
- **Fig. 8**: zeigt das Parkventil gemäß Fig. 7 in der Stellung Fahrt.

### FIGURENBESCHREIBUNG

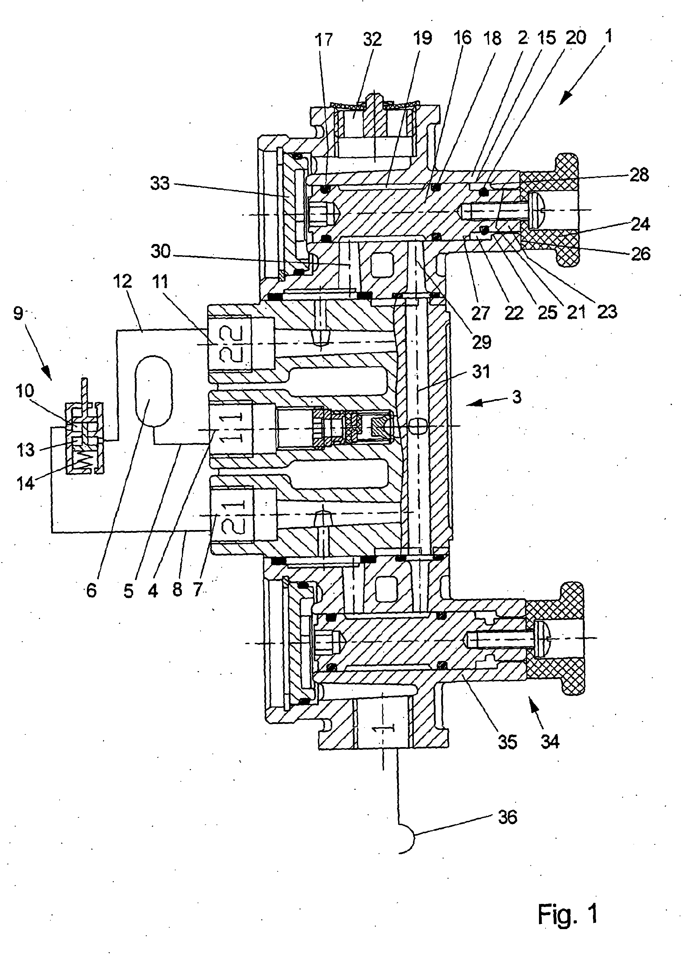

Fig. 1 zeigt ein Parkventil 1 mit seinem Gehäuse 2, angeflanscht an einen Gehäuseblock 3, der einen Mittelteil einer zusammengefügten Baueinheit bildet. Der Gehäuseblock 3 kann in seinem Innern so ausgebildet sein, wie dies dargestellt ist. Es kann sich aber auch um ein Anhängerbremsventil oder auch nur um eine Notbremseinrichtung handeln. Der Gehäuseblock 3 weist einen Anschluss 4 auf, von dem eine Leitung 5 zu einem Vorratsbehälter 6 für Druckluft auf dem Anhänger führt. Der Gehäuseblock 3 weist auch einen Anschluss 7 auf, von dem eine Steuerleitung 8 zu einem kombinierten Federspeicherbremszylinder 9 führt. Die Steuerleitung 8 ist an die Bremskammer 10 des Betriebsbremsteils des Federspeicherbremszylinders 9 angeschlossen. Von einem Anschluss 11 am Gehäuseblock 3 führt eine Löseleitung 12 zu einer Lösekammer 13 des Federspeicherteils des Federspeicherbremszylinders 9. Der Federspeicherteil des Federspeicherbremszylinders 9 ist ebenfalls in bekannter Weise ausgebildet und weist eine Speicherfeder 14 auf, über die bei entlüfteter Lösekammer 13 die Federspeicherbremsen angezogen werden, also der Anhänger beispielsweise in festgebremster Parkstellung gehalten wird.

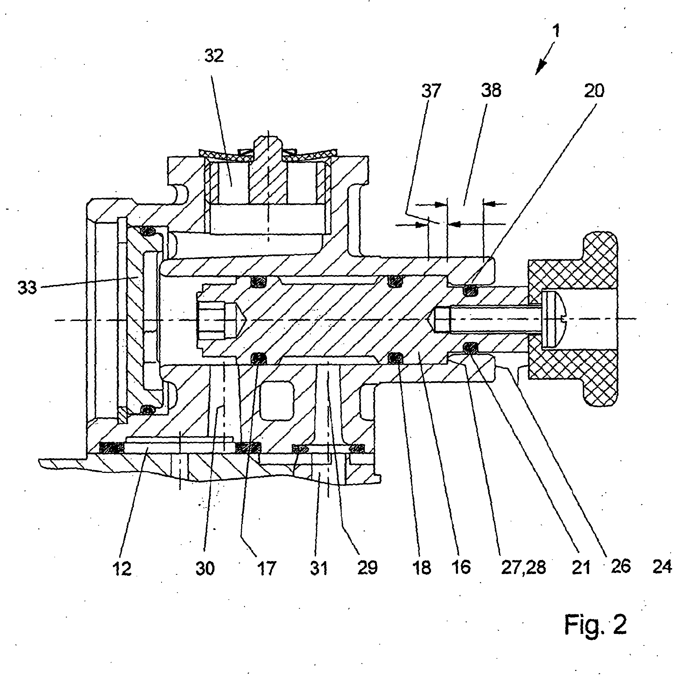

Das Parkventil 1 weist in seinem Gehäuse 2 eine Bohrung 15 auf, in der ein Schieber 16 gleitend und dichtend geführt ist. Der Schieber 16 weist im Abstand voneinander angeordnete Wulste auf, in deren Bereich in Nuten Dichtungen 17 und 18 angeordnet sind. Zwischen den Dichtungen 17 und 18 besitzt der Schieber 16 eine Einschnürung 19, die der Herstellung einer Luftverbindung dient. Der Schieber 16 trägt weiterhin ein Reibglied 20, welches wie dargestellt, als O-Ring ausgebildet ist. Das Reibglied 20 kann aber auch als geschlitzter Metallring oder in anderer Weise ausgebildet sein. Dem Reibglied 20 ist eine Gegenfläche 21 zugeordnet, die in Durchmesser, Länge und Lage auf die Anordnung des Reibgliedes 20 abgestimmt ist. Das Reibglied 20 befindet sich in der in Fig. 1 dargestellten Stellung (Fahrt) innerhalb einer Kammer 22 und damit außerhalb eines Kontakts zu der Gegenfläche 21. Der Schieber 16 weist einen Fortsatz 23 auf, der aus dem Gehäuse 2 des Parkventils 1 herausgeführt ist und in einem Betätigungsknopf 24 endet, der der manuellen Betätigung des Parkventils 1 dient. Am Übergang zwischen der Kammer 22 und der ringförmigen Gegenfläche 21 ist eine kegelartige Schrägfläche 25 gebildet bzw. vorgesehen, die eine Anlaufschräge für das Reibglied 20 beim Herausziehen aus dem Gehäuse bildet. Der Betätigungskopf 24 bildet mit der Stirnfläche des Gehäuses 2 einen Anschlag 26 bzw. ein Anschlagpaar, der das manuelle Einschieben des Schiebers 16 in das Gehäuse 2 begrenzt. Damit wird eine Endstellung des Schiebers 16 im Gehäuse 2 festgelegt, von dem aus der mögliche Hub des Schiebers 16 relativ zum Gehäuse 2 beginnt. Die andere Endstellung wird in herausgezogenem Zustand des Schiebers 16 aus dem Gehäuse 2 erreicht und ist in Fig. 2 dargestellt (Parkstellung). Zur Festlegung dieser zweiten Endstellung bzw. zur Begrenzung des maximalen Hubes zwischen den beiden Endstellungen besitzt der Schieber einen Anschlag 27, der an einer Stufe am Übergang des Mittelteils des Schiebers 16 zu seinem Fortsatz 23 gebildet ist. Dem Anschlag 27 ist ein Gegenanschlag 28 am Gehäuse 2 zugeordnet. Am Gehäuse 2 des Parkventils 1 sind weiterhin zwei Anschlüsse 29 und 30 verwirklicht. Am Anschluss 29 ist ein Kanal 31 oder jedenfalls eine Leitung angeschlossen, die dauernd in Verbindung mit dem Vorratsbehälter 6 steht. Am Anschluss 30 ist die Löseleitung 12 angeschlossen, die zur Lösekammer 13 führt. Dies kann bei einem singulären Parkventil 1 auf direkte Weise geschehen, bei einer zusammengebauten Ventileinheit, wie in Fig. 1 dargestellt, über den Gehäuseblock 3 und dessen Anschluss 11.

Die Anschlüsse 29 und 30 sind axial und mit Abstand sowie in Abstimmung auf die axiale Länge der Einschnürung 18 und der Lage der Dichtungen 17 und 18 gehäuseseitig angeordnet. Am Gehäuse 2 des Parkventils 1 ist weiterhin ein Entlüftungsanschluss 32 vorgesehen, der in die Atmosphäre führt. Das Gehäuse 2 des Parkventils 1 ist mit einem Deckel 33 luftdicht verschlossen.

An die Baueinheit aus Gehäuseblock 3 und Parkventil 1 kann auch ein Rangierventil 34 mit seinem Gehäuse 35 angeflanscht sein. Das Rangierventil 34, welches ebenfalls manuell betätigbar ist, dient zu Rangierzwecken, ermöglicht also das Aufheben der Bremswirkung des abgestellten Anhängers in der einen Endstellung sowie das Festbremsen des Anhängers in der anderen Endstellung. Das Rangierventil 34 ist grundsätzlich ähnlich bzw. übereinstimmend zu dem Parkventil 1 ausgebildet und entsprechend angeschlossen. Es fehlt lediglich das Reibglied 20 am Schieber. Das Gehäuse 35 des Rangierventils 34 ist übereinstimmend mit dem Gehäuse 2 des Parkventils 1 ausgebildet, wobei hier lediglich der Einsatz des Entlüftungsanschlusses 32 fehlt und an dessen Stelle die Vorratsleitung 36 angeschlossen ist. Der grundsätzliche Aufbau, die Betätigung und die dabei eintretende Wirkungsweise des Rangierventils 34 sind im Stand der Technik bekannt. Da sich die vorliegende Erfindung auf das Parkventil 1 bezieht, sei in der Folge dessen Wirkungsweise beschrieben:

Der Schieber 16 des Parkventils 1 befindet sich in der in Fig. 1 dargestellten eingedrückten Stellung in der Stellung Fahrt, wobei diese Endstellung durch die Anschläge 26 begrenzt ist. Das Reibglied 20 befindet sich in einiger axialer Entfernung von der Gegenfläche 21 bzw. der Schrägfläche 25, so dass beim Herausziehen des Schiebers 16 aus der in Fig. 1 dargestellten Stellung der Schieber 16 zunächst einen Teilhub durchläuft, in welchem die zu überwindende Reibung des Schiebers 16 allein durch die Gleitreibung der Dichtungen 17 und 18 mit der Bohrung 15 bestimmt wird. Der Schieber 16 lässt sich über diesen Teilhub relativ leicht bewegen. Die Dimensionierung des Teilhubs in axialer Richtung ist so bemessen, dass die Dichtung 17 die Verschneidungsbohrung des Anschlusses 30 mit der Bohrung 15 während des Teilhubs noch nicht erreicht. Mit Beendigung des Teilhubs der Herausziehbewegung kommt das Reibglied 20 mit der Schrägfläche 25 in Kontakt, so dass das Reibglied 20 ohne Abscheren des z. B. aus Gummi bestehenden O-Rings in den Bereich der Gegenfläche 21 eintritt und dabei komprimiert wird. Damit wird der Beginn einer Kraftschwelle erreicht.

Die Beendigung des leichtgängigen Teilhubs durch Anschlagen des Reibgliedes 20 an der Schrägfläche 25 kann auch bei entsprechend leichtgängig verschiebbarem Schieber 16 ungewollt und unbeabsichtigt durch während der Fahrt einwirkende Stöße und Schwingungen geschehen. Mit der Beendigung des Teilhubs wird jedoch der Schieber 16 relativ zur Bohrung 15 stillgesetzt, wobei der Anschluss 29 mit dem Anschluss 30 über die Einschnürung 19 nach wie vor in Verbindung steht, so dass keine Gefahr des Eintritts einer Zwitterstellung gegeben ist, innerhalb der die Federspeicherbremse eine Bremswirkung erbringen könnte.

Sobald jedoch beim manuellen Herausziehen der leichtgängige Teilhub des Gesamthubs überfahren bzw. beendet ist, ergibt sich eine Kraftschwelle, die über einen Kraftschwellenbereich so lange fortwirkt, wie das Reibglied 20 an der Gegenfläche 21 in Reibkontakt ist. Bei dem in den Fig. 1 und 2 gezeigten Ausführungsbeispiel erstreckt sich dieser Teilhub unter erhöhter Reibung bis zu der Endstellung (Parken), die gemäß Fig. 2 erreicht ist. In dieser Endstellung hat aber die Dichtung 17 die Verschneidung des Anschlusses 30 im Gehäuse 2 sicher überfahren und erneut Dichtwirkung mit der Bohrung 15 erbracht, so dass nunmehr die Löseleitung 12 kopfseitig bzw. Deckelseitig über den Entlüftungsanschluss 32 entlüftet und damit die Federspeicherbremse angezogen wird. Der Anhänger ist festgebremst und befindet sich in Parkstellung. Der Schieber 16 kann die in Fig. 2 dargestellte herausgezogene Parkstellung nicht selbsttätig verlassen, sondern ist auf eine sinnvolle manuelle Betätigung angewiesen. Nach dem Auffüllen des unter Umständen entlüfteten Vorratsbehälters 6 in der Parkstellung bei gekuppeltem Anhänger und laufenden Kompressor wird das Parkventil manuell betätigt, d. h. der Schieber 16 in die in Fig. 1 dargestellte Fahrstellung überführt. Dabei muss zunächst der Teilhub unter erhöhter Reibung zurückgelegt werden, an den sich der Teilhub unter vergleichsweise verringerter Reibung anschließt. Bei dieser sinnfälligen und spürbaren Betätigung ist sichergestellt, dass auch die in Fig. 1 dargestellte Endstellung manuell erreicht wird.

Bei dem Ausführungsbeispiel der Fig. 1 und 2 ist der Gesamthub des Schiebers 16 relativ zum Gehäuse 2 in einen ersten Teilhub 37 und einen zweiten Teilhub 38 unterteilt, die in Fig. 2 angegeben sind. Der Teilhub 37 erfolgt unter vergleichsweise geringer Reibung. Der Teilhub 38 kann nur unter erhöhter Reibung zurückgelegt bzw. durchschritten werden, so dass sich die damit gebildete Kraftschwelle über die axiale Länge des Teilhubs 38 erstreckt. Der Teilhub 38 endet hier mit Ende der zweiten Endstellung, die den Gesamthub begrenzt.

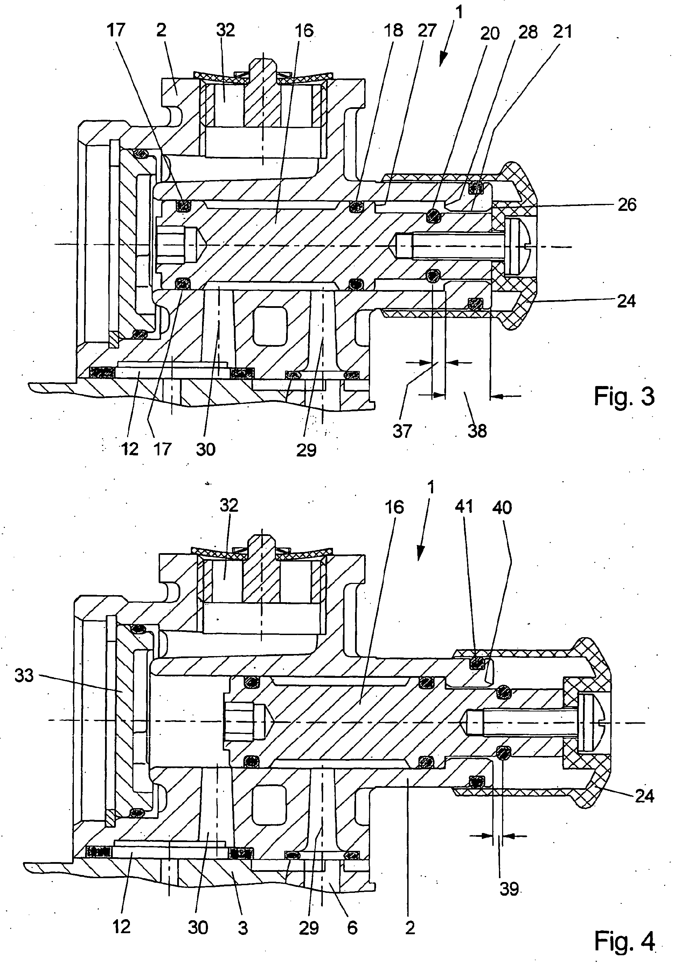

Das Ausführungsbeispiel der Fig. 3 und 4 ist grundsätzlich ähnlich aufgebaut wie das Ausführungsbeispiel der Fig. 1 und 2. Lediglich die geometrische Anordnung des Reibgliedes 20 und der Gegenfläche 21 sowie der zugehörigen Anschläge 26, 27, 28 ist hier so getroffen, dass der Gesamthub in drei Teilhübe 37, 38, 39 unterteilt ist. Auch hier besitzt der Teilhub 38 die erhöhte Reibung, während die Teilhübe 37 und 39 relativ leichtgängig durchfahren werden können. Es ist erkennbar, dass bei diesem Ausführungsbeispiel auch die Endstellung in herausgezogenem Zustand frei von erhöhter Reibung ist. Die Anordnung und Beschränkung des Teilhubs 38 auf einen Mittelbereich des Gesamthubs trägt dazu bei, dass dieser Kraftbereich bei der manuellen Betätigung in der einen oder anderen Richtung mit Sicherheit bemerkt, durchfahren und überschritten wird, so dass verlässlich die jeweils andere Endposition bei der manuellen Betätigung erreicht werden. Auch im Bereich des stirnseitigen Endes des Gehäuses 2 kann eine Schrägfläche 40 verwirklicht sein, die eine entsprechende Funktion wie die Schrägfläche 25 erfüllt. Der Betätigungskopf 24 erstreckt sich hier hülsenartig über einen Fortsatz des Gehäuses 2 und arbeitet mit einer Dichtung 41 zusammen, so dass insoweit eine Staubdichtheit erreicht wird. Dies trägt dazu bei, das Eindringen von Staub in das Innere des Parkventils zu verhindern und damit die erhöhte Reibung über den Teilhub 38 nicht zu verändern.

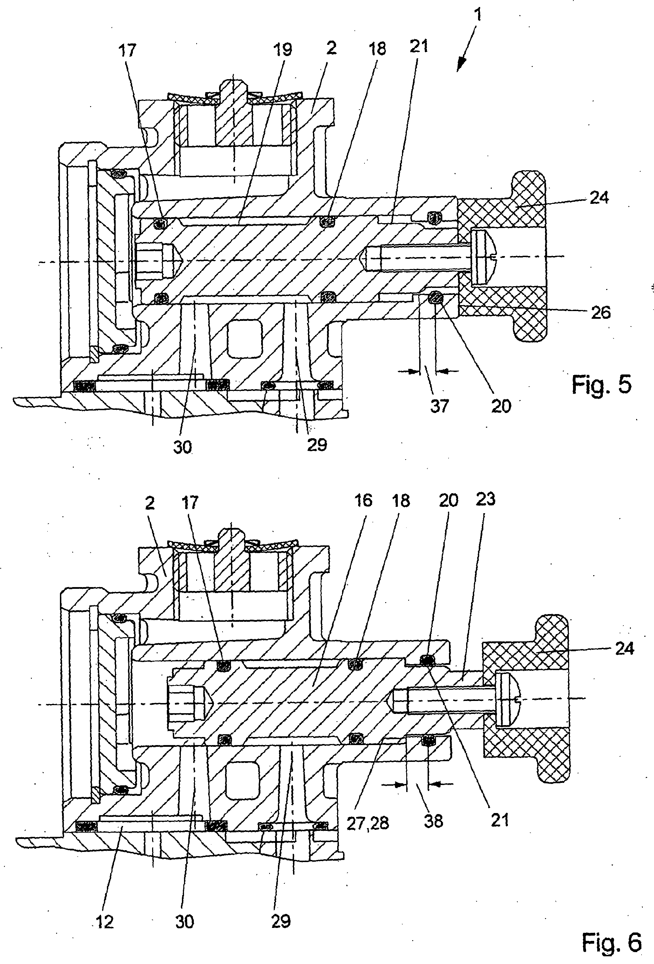

Auch das Ausführungsbeispiel der Fig. 5 und 6 ist grundsätzlich ähnlich ausgebildet wie die Ausführungsbeispiele der Fig. 1 bis 4. Anders als dort ist hier jedoch das Reibglied 20 auf der Seite des Gehäuses 2 angeordnet, während die Gegenfläche 21 durch eine Verdickung am Fortsatz 23 des Schiebers 16 gebildet wird. Der Gesamthub ist auch hier in die Teilhübe 37 und 38 unterteilt, wobei der Teilhub 37 mit der vergleichsweise geringeren Reibung die eingeschobene Endstellung (Fig. 5) umfasst bzw. dort beginnt, während die herausgezogene Endstellung (Parken) in Fig. 6 erreicht ist und den Teilhub 38 begrenzt.

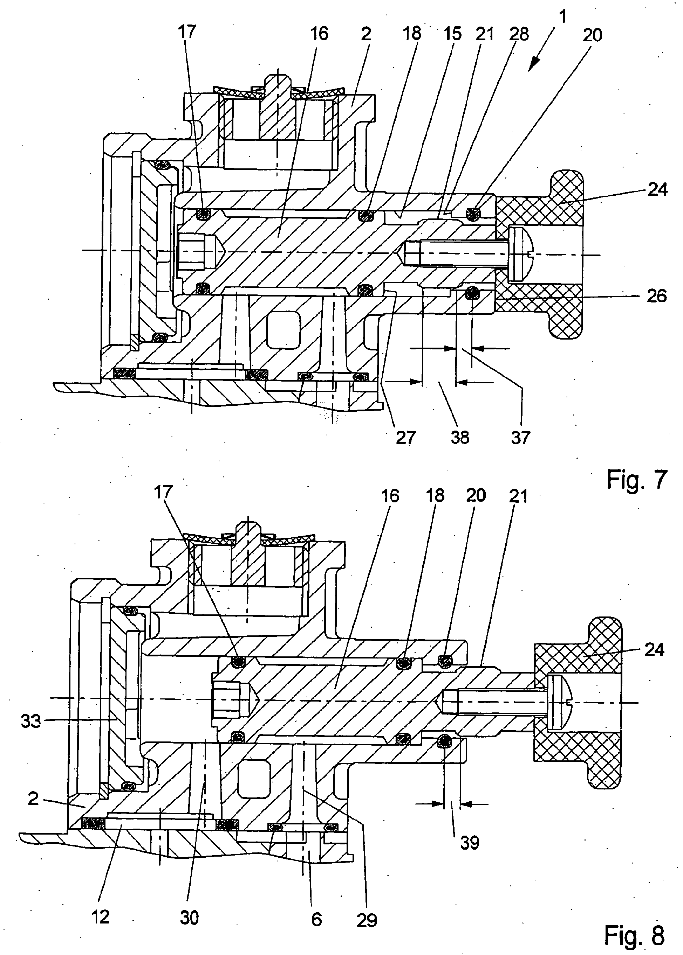

Auch das Ausführungsbeispiel der Fig. 7 und 8 schließt an die vorangehenden Ausführungsbeispiele an. Auch hier ist ähnlich wie bei dem Ausführungsbeispiel der Fig. 5 und 6 das Reibglied 20 auf der Seite des Gehäuses 2 angeordnet, während die Gegenfläche 21 am Schieber 16 gebildet wird. Auch hier ist der Gesamthub des Schiebers 16 relativ zum Gehäuse 2 in drei Teilhübe 37, 38 und 39 unterteilt. Die Teilhübe 37 und 39 sind die mit vergleichsweise geringer Reibung, während der Teilhub 38 unter Ausschluss beider Endstellungen im Mittelbereich angeordnet ist und die Kraftschwelle bzw. den Kraftbereich darstellt.

Bei allen Ausführungsformen sind die Elemente in geometrischer Zuordnung zueinander so angeordnet und ausgebildet, dass Zwitterstellungen für eine teilweise Verbindung der Anschlüsse 29 und 30 vermieden werden. Die axiale Erstreckung des Hubs 38 ist größer als der Bereich, auf dem Zwitterstellungen sich einstellen oder eingenommen werden könnten. Dies dient nicht nur der Erhöhung der Sicherheit bei der manuellen Betätigung, sondern schließt zugleich auch Zwitterstellungen infolge einwirkender Stöße und Schwingungen während der Fahrt aus.

### BEZUGSZEICHENLISTE

- 1: Parkventil
- 2: Gehäuse
- 3: Gehäuseblock
- 4: Anschluss
- 5: Leitung
- 6: Vorratsbehälter
- 7: Anschluss
- 8: Steuerleitung
- 9: Federspeicherbremszylinder
- 10: Bremskammer
- 11: Anschluss
- 12: Löseleitung
- 13: Lösekammer
- 14: Speicherfeder
- 15: Bohrung
- 16: Schieber
- 17: Dichtung
- 18: Dichtung
- 19: Einschnürung
- 20: Reibglied
- 21: Gegenfläche
- 22: Kammer
- 23: Fortsatz
- 24: Betätigungsknopf
- 25: Schrägfläche
- 26: Anschlag
- 27: Anschlag
- 28: Gegenanschlag
- 29: Anschluss
- 30: Anschluss
- 31: Kanal
- 32: Entlüftungsanschluss
- 33: Deckel
- 34: Rangierventil
- 35: Gehäuse
- 36: Vorratsleitung
- 37: Teilhub
- 38: Teilhub
- 39: Teilhub
- 40: Schrägfläche
- 41: Dichtung

## Patentansprüche

1. Parkventil (1) für die manuelle Betätigung einer Federspeicher-Feststellbremse eines Anhängers, mit einem Gehäuse (2), das zwei Anschlüsse (29, 30) für eine zu der Lösekammer (13) des Federspeicherbremszylinders (9) führende Löseleitung (12) und eine Leitung (31) für Vorratsluft sowie einen Entlüftungsanschluss (32) aufweist, einem in dem Gehäuse (2) gleitend und dichtend über einen Gesamthub zwischen zwei durch Anschläge (26, 27, 28) begrenzten Endstellungen geführten, aus dem Gehäuse (2) herausragenden Schieber (16), der relativ zu den Anschlüssen (29, 30) angeordnete Dichtungen (17, 18) trägt, und mit einer bei der manuellen Betätigung zu überwindenden Kraftschwelle, **dadurch gekennzeichnet, dass** als Kraftschwelle ein Reibglied (20) und eine damit zusammenwirkende, sich in Richtung des Gesamthubes des Schiebers (16) über einen Teilhub (38) erstreckende Gegenfläche (21) vorgesehen sind, die über den Teilhub (38) zwischen den beiden Endstellungen mit erhöhter Reibung in Kontakt sind.

2. Parkventil nach Anspruch 1, **dadurch gekennzeichnet, dass** die Gegenfläche (21) relativ zu dem Reibglied (20) so positioniert ist, dass mindestens eine der beiden Endstellungen frei von der Kraftschwelle bleibt.

3. Parkventil nach Anspruch 1 oder 2, **dadurch gekennzeichnet, dass** das Reibglied (20) als ein in eine Nut eingesetzter O-Ring ausgebildet ist.

4. Parkventil nach mindestens einem der Ansprüche 1 bis 3, **dadurch gekennzeichnet, dass** das Reibglied (20) auf dem Schieber (16) oder im Gehäuse (2) angeordnet ist.

5. Parkventil nach mindestens einem der Ansprüche 1 bis 4, **dadurch gekennzeichnet, dass** die Gegenfläche (21) im Gehäuse (2) oder auf dem Schieber (16) angeordnet ist.

6. Parkventil nach mindestens einem der Ansprüche 1 bis 5, **dadurch gekennzeichnet, dass** die Gegenfläche (21) ein- oder beidendig mit Anlaufschrägen (25, 40) versehen ist.

7. Parkventil nach mindestens einem der Ansprüche 1 bis 6, **dadurch gekennzeichnet, dass** der durch den Kontakt unter erhöhter Reibung zwischen Reibglied (20) und Gegenfläche (21) mit der Kraftschwelle belegte Teilhub (38) so relativ zum Gesamthub zwischen den beiden Endstellungen positioniert ist, dass der Teilhub (38) während des Herausziehens des Schiebers (16) durchlaufen wird.

8. Parkventil nach mindestens einem der Ansprüche 1 bis 7, **dadurch gekennzeichnet, dass** der Teilhub (38) unter Ausschluss beider Endstellungen relativ zum Gesamthub positioniert ist.

9. Parkventil nach mindestens einem der Ansprüche 1 bis 8, **dadurch gekennzeichnet, dass** der Teilhub (38) eine Erstreckung in Richtung des Gesamthubes des Schiebers (16) aufweist, die etwa der Hälfte des Gesamthubes entspricht.

10. Parkventil nach mindestens einem der Ansprüche 1 bis 9, **dadurch gekennzeichnet, dass** der durch den Kontakt unter erhöhter Reibung zwischen Reibglied (20) und Gegenfläche (21) mit der Kraftschwelle belegte Teilhub (38) so relativ zum Gesamthub zwischen den beiden Endstellungen positioniert ist, dass er Zwitterstellungen des Parkventils (1) einschließt.

## Claims

1. A parking valve (1) for manual operation of a spring-loaded trailer parking brake, including a housing (2), the housing comprising two connections (29, 30) for a release conduit (12) to the release chamber (13) of the spring brake actuator (9) and for a conduit (31) for pressurized air and a vent opening (32), further including a slider (16), the slider being sealingly guided in the housing (2) within a total stroke between two end positions defined by stops (26, 27, 28), extending out of the housing (2), and carrying seals (17, 18) being located with respect to the connections (29, 30), further including a force threshold to be overcome when manually operated, **characterized in that** a friction member (20) and a cooperating surface (21) acting as the force threshold are provided, the surface (21) extending over a partial stroke (38) in the direction of the total stroke of the slider (16), the friction member (20) and the cooperating surface (21) being in contact to each other along the partial stroke (38) between the two end positions with increased friction.

2. The parking valve (1) of claim 1, **characterized in that** the cooperating surface (21) is located with respect to the friction element (20) leaving at least one of the two end positions free of the force threshold.

3. The parking valve (1) of claim 1 or 2, **characterized in that** the friction element (20) is an O-ring being positioned in a groove.

4. The parking valve (1) of one of the claims 1 to 3, **characterized in that** the friction element (20) is located on the slider (16) or on the housing (2).

5. The parking valve (1) of at least one of the claims 1 to 4, **characterized in that** the cooperating surface (21) is located on the slider (16) or on the housing (2).

6. The parking valve (1) of at least one of the claims 1 to 5, **characterized in that** the cooperating surface (21) is designed to include inclined surfaces (25, 40) at one end or both of its ends.

7. The parking valve (1) of at least one of the claims 1 to 6, **characterized in that** the partial stroke (38) having the increased friction during the contact of the friction element (20) and the cooperating surface (21) is located between both end positions with respect to the total stroke in a manner to override the partial stroke (38) during pulling the slider (16).

8. The parking valve (1) of at least one of the claims 1 to 7, **characterized in that** the partial stroke (38) is arranged with respect to the total stroke without including both end positions.

9. The parking valve (1) of at least one of the claims 1 to 8, **characterized in that** the partial stroke (38) extends over about half of the length of the total stroke in the direction of the total stroke.

10. The parking valve (1) of at least one of the claims 1 to 9, **characterized in that** the partial stroke (38) having the increased friction during the contact of the friction element (20) and the cooperating surface (21) is located between both end positions with respect to the total stroke in a manner to include hermaphrodite positions.

## Revendications

1. Valve de frein de stationnement (1) pour l'actionnement manuel d'un frein de stationnement à accumulation d'une remorque, comportant un boîtier (2), qui est muni de deux raccords (29, 30) pour une conduite de desserrage (12) menant vers la chambre de desserrage (13) du cylindre de frein à accumulation (9), et une conduite (31) pour air de stockage, ainsi qu'un raccord de purge d'air (32), une coulisse (16), qui est montée dans le boîtier (2) de manière étanche et coulissante sur une course complète entre deux positions de fin de course limitées par des butées (26, 27, 28) et s'avançant hors du boîtier (2) et qui porte des garnitures d'étanchéité (17, 18) disposées par rapport aux raccords (29, 30), et comportant un seuil de force à surmonter lors de l'actionnement manuel, **caractérisée en ce qu'**un organe de friction (20) et une surface complémentaire (21), qui coopère avec ce dernier et couvre une course partielle (38) dans la direction de la course complète de la coulisse (16), sont prévus pour former le seuil de force et sont en contact avec un frottement plus élevé sur la course partielle (38) entre les deux positions de fin de course.

2. Valve de frein de stationnement selon la revendication 1, **caractérisée en ce que** la surface complémentaire (21) est positionnée par rapport à l'organe de friction (20), de telle sorte qu'au moins une des deux positions de fin de course reste libre du seuil de force.

3. Valve de frein de stationnement selon la revendication 1 ou 2, **caractérisée en ce que** l'organe de friction (20) est réalisé sous la forme d'un joint torique posé dans une rainure.

4. Valve de frein de stationnement selon au moins une des revendications 1 à 3, **caractérisée en ce que** l'organe de friction (20) est disposé sur la coulisse (16) ou dans le boîtier (2).

5. Valve de frein de stationnement selon au moins une des revendications 1 à 4, **caractérisée en ce que** la surface complémentaire (21) est disposée dans le boîtier (2) ou sur la coulisse (16).

6. Valve de frein de stationnement selon au moins une des revendications 1 à 5, **caractérisée en ce que** la surface complémentaire (21), sur une extrémité ou sur les deux extrémités, est munie de rampes d'introduction (25, 40).

7. Valve de frein de stationnement selon au moins une des revendications 1 à 6, **caractérisée en ce que** la course partielle (38), occupée par le seuil de force généré par le contact à frottement plus élevé entre l'organe de friction (20) et la surface complémentaire (21), est positionnée par rapport à la course complète entre les deux positions de fin de course, de telle sorte que la coulisse (16) parcourt la course partielle (38) pendant son déplacement vers l'extérieur.

8. Valve de frein de stationnement selon au moins une des revendications 1 à 7, **caractérisée en ce que** la course partielle (38) est positionnée par rapport à la course complète à l'exclusion des deux positions de fin de course.

9. Valve de frein de stationnement selon au moins une des revendications 1 à 8, **caractérisée en ce que** la course partielle (38), dans la direction de la course complète de la coulisse (16), a une dimension qui correspond sensiblement à la moitié de la course complète.

10. Valve de frein de stationnement selon au moins une des revendications 1 à 9, **caractérisée en ce que** la course partielle (38), occupée par le seuil de force généré par le contact à frottement plus élevé entre l'organe de friction (20) et la surface complémentaire (21), est positionnée par rapport à la course complète entre les deux positions de fin de course, de telle sorte qu'elle inclut des positions réversibles de la valve de frein de stationnement (1).
